# EUROPÄISCHE PATENTSCHRIFT

(11) **EP 1 761 414 B1**
(45) Veröffentlichungstag und Bekanntmachung des Hinweises auf die Patenterteilung: **24.07.2019**
(21) Anmeldenummer: 05755954.4
(22) Anmeldetag: 24.06.2005
(51) Int. Cl.: B60R 21/01

(54) **VERFAHREN, VORRICHTUNG UND CRASH-SENSOR ZUR AKTIVIERUNG VON INSASSENSCHUTZEINRICHTUNGEN IN EINEM KRAFTFAHRZEUG**
METHOD, DEVICE AND CRASH SENSOR FOR ACTIVATING OCCUPANT PROTECTION SYSTEMS IN A MOTOR VEHICLE
PROCEDE, DISPOSITIF ET DETECTEUR DE COLLISION DESTINES A L'ACTIONNEMENT DE SYSTEMES DE PROTECTION DES OCCUPANTS D'UN VEHICULE

(30) Priorität: 29.06.2004 DE 102004031557
(43) Veröffentlichungstag der Anmeldung: 14.03.2007
(73) Patentinhaber: Bayerische Motoren Werke Aktiengesellschaft, 80809 München (DE)
(72) Erfinder: BAUR, Richard, 85276 Pfaffenhofen (DE); URBAHN, Jan, Ramsey, NJ 07446 (US); WEICHENBERGER, Lothar, 86669 Klingsmoos (DE); WOEHRL, Alfons, 86529 Schrobenhausen (DE)
(74) Vertreter: Bullwein, Fritz
(86) Internationale Anmeldenummer: PCT/EP2005/006832
(87) Internationale Veröffentlichungsnummer: WO 2006/000428

(56) Entgegenhaltungen:
- EP-A- 0 305 654
- EP-A2- 1 306 269
- DE-A1- 10 034 524
- DE-A1- 19 745 309

## Beschreibung

Die Erfindung betrifft ein Verfahren zur insassengefährdungsrelevanten Aktivierung von Insassen-Schutzeinrichtungen in einem Kraftfahrzeug bei Crashfällen, bei dem mit Hilfe eines prozessorgestützten Auslösesystems Signale von Crash-Sensoren ausgewertet und die Insassen-Schutzeinrichtungen angesteuert werden, wobei mindestens folgende Schritte durchgeführt werden:
1.) Erfassung und Vorverarbeitung von durch Einwirkungen auf die Fahrzeugkarosserie erzeugten Signaturen mittels eines Crash-Sensorensystems, bestehend aus einer Mehrzahl von gleichartigen peripheren, jeweils wenigstens ein Körperschall-Sensorelement umfassenden Crash-Sensoren, die an verschiedenen Stellen der Fahrzeugkarosserie angeordnet sind,
2.) Auswertung der vorverarbeiteten Signaturen oder daraus abgeleiteter Größen mit Hilfe eines dem Auslösesystem zugeordneten Crash-Algorithmus, nach Art, Intensität, Richtung und Zeit von Crash-Signaturen und/oder Insassen-Gefahrensignaturen, und
3.) Auslösung der crash-relevanten Insassen-Schutzeinrichtungen zu einem jeweiligen, nach der erzielbaren Insassen-Schutzwirkung der Insassen-Schutzeinrichtungen bestimmten Zeitpunkt, bei einer Überschreitung eines Insassen-Gefährdungsschwellwertes.

Die Erfindung betrifft weiter eine Vorrichtung zur insassengefährdungsrelevanten Aktivierung von Insassen-Schutzeinrichtungen in einem Kraftfahrzeug bei Crashfällen, bei der mit Hilfe eines prozessorgestützten Auslösesystems Signale von Crash-Sensoren auswertbar und die Insassen-Schutzeinrichtungen ansteuerbar sind, umfassend mindestens drei gleichartige, periphere, jeweils wenigstens ein Körperschall-Sensorelement umfassende Crash-Sensoren, die an verschiedenen Stellen der Fahrzeugkarosserie angeordnet sind.

Derartige Verfahren und Vorrichtungen sind bekannt aus der gattungsbildenden EP 0 305 654 A2.

Moderne Kraftfahrzeuge sind zum Schutz der Insassen vor Verletzung oder Tod bei Crashfällen mit einem Insassen-Schutzsystem, das meist aus mehreren Insassen-Schutzeinrichtungen, beispielsweise Frontairbag, Seitenairbag, Kopfairbag, Gurtstraffer, und einem prozessorgestützten Auslösesystem zur Aktivierung der Schutzeinrichtungen im Crashfall besteht, ausgestattet. Die Insassen-Schutzeinrichtungen sind überwiegend für nur einen Aktivierungsvorgang ausgelegt und schützen nach ihrer Aktivierung (Gurte straffen und verriegeln, Airbags entfalten) die Insassen im Crashfall vor schwereren Verletzungen durch Aufprall an Fahrzeugteilen im Innenraum oder durch Herausschleudern aus dem Kraftfahrzeug. Insbesondere in offenen Fahrzeugen oder Fahrzeugen mit leichten Verdeckeinrichtungen können integrierte Überrollbügel hinzukommen, die bei einem Überschlag ausgefahren werden, um den Insassen gegenüber der Fahrzeugkarosserie einen schützenden Hohlraum zu verschaffen.

Die Insassen-Schutzeinrichtungen erzielen den Schutz des Insassen bei Crashfällen durch die Rückhaltung des Insassen gegen den Aufbau einer Differenzgeschwindigkeit zum Kfz ab dem Zeitpunkt ihrer Auslösung, und durch die Dämpfung des resultierenden Insassen-Aufpralls aus seiner entstandenen Differenzgeschwindigkeit am Kfz. Die Leistungsfähigkeit der Schutzeinrichtungen für den Insassenschutz hängt daher stark von ihrer zeitgerechten Aktivierung ab. Insbesondere hängt die Schutzwirkung der Airbags von der zeitlichen Lage des Aktivierungszeitpunktes im Crashverlauf ab. Die Aktivierung muss deshalb sehr genau zu dem Zeitpunkt im Crashverlauf erfolgen, die der betreffenden Schutzeinrichtung eine maximale Schutzleistung am Insassen ermöglicht. Sowohl eine frühere als auch eine spätere Aktivierung der jeweiligen Schutzeinrichtung verursacht eine starke Einbuße von Schutzleistung für den Insassen, insbesondere durch Abweichungen von der sicherheitsgerechten optimalen Abbremsung des Insassenkörpers durch eine zu hohe Differenzgeschwindigkeit zum Kfz, bzw. zum Airbag und/oder durch einen zu geringen Dämpfungsweg.

Weiterhin soll eine unnötige Auslösung von Schutzeinrichtungen bei leichteren Crashvorgängen ohne Insassengefährdung vermieden werden, weil sie gefährliche Fehlreaktionen durch erschreckte Insassen hervorrufen kann, und für die Wiederherstellung der nun fehlenden Funktionsbereitschaft der einmal ausgelösten Schutzeinrichtung(en) für einen zukünftigen Crashfall, hohe Kosten verursacht. Schließlich soll die Schutzwirkungsdauer aus Sicherheitsgründen (Sichtbeschränkung, Beweglichkeitseinschränkung, Pyro-Ladungsmenge) auf das erforderliche Mindestmaß begrenzt sein. Dabei ist die funktionale Sicherheit der jeweiligen Insassen-Schutzeinrichtung gemäß DIN IEC 61508-SIL2/3 zu gewährleisten.

Das Auslösesystem muss also erkennen, ob ein Crashereignis mit einer Insassengefährdung auftritt, und ggf. die entsprechenden Schutzeinrichtungen zu dem jeweils richtigen Zeitpunkt auslösen. Anschließend müssen sich die Schutzeinrichtungen selbsttätig wieder deaktivieren (Gurte entriegeln, Airbag entleeren).

Die Anforderungen an die Insassen-Schutzeinrichtungen werden durch laufende Entwicklungstrends in der Kraftfahrzeugindustrie und im Fahrverhalten, wie Knautschzonen mit kleineren Abmessungen, höhere Crashgeschwindigkeiten und Crashvorgange über größere Crashwinkelbereiche, zunehmend noch verschärft, so dass es einer kontinuierlichen Weiterentwicklung der bestehenden Insassen-Schutzeinrichtungen bedarf.

Bekannte Insassen-Schutzsysteme weisen ein an einer zentralen Stelle im Kraftfahrzeug, beispielsweise am sogenannten Fahrzeugtunnel angeordnetes Auslösesystem auf. Sie verwenden zur Crasherkennung und zur Bestimmung der Aktivierungszeitpunkte für die einzelnen Schutzeinrichtungen ein Beschleunigungssignal, das über einen zentralen, im Auslösesystem angeordneten, Beschleunigungsaufnehmer, beispielsweise einen Trägheitssensor, in einer oder mehreren Koordinaten erfasst wird. Das Auslösesystem interpretiert über eine zugeordnete Auswerteeinheit den Sensor-Signalverlauf, der im Crashfall als eine Crash-Signatur erkannt wird, und leitet ggf. angemessene Maßnahmen zur Aktivierung der Insassen-Schutzeinrichtungen ein.

Nachteilig bei den bekannten Insassen-Schutzsystemen wirkt sich aus, dass der aus dem gemessenen Beschleunigungsvektor hervorgehende Beschleunigungsverlauf je nach Crashtyp, beispielsweise Frontcrash oder Seitencrash, eine starke Winkelabhängigkeit aufweist. Die so erhaltene Crashsignatur ist daher bestenfalls für die unterschiedlichen Crashfälle in der Fahrzeuglängsrichtung (X-Richtungsbereich), d.h. bei Front- bzw. Heckcrashs, für eine sichere Crashbestimmung ausreichend, nicht jedoch für die unterschiedlichen Crashfälle in der Fahrzeugquerrichtung (Y-Richtungsbereich), d.h. bei Seitencrashs, da die bekannten Auslösesysteme für die Auswertung des Beschleunigungsvektors mit zunehmender Abweichung der Crashrichtung von der X-Richtung und/oder mit zunehmender Crashgeschwindigkeit zuviel Crashzeitanteil zur ausreichend wahrscheinlich richtigen Crasherkennung benötigen. Neben der Beschleunigung weisen auch Karosserieverformungen, die einer sogenannte Insassen-Schutzsignatur zugeordnet werden und der maximal mögliche Bremsweg des Insassenkörpers (Körperbremsweg), der einer sogenannte Insassen-Gefahrensignatur zugeordnet wird, eine starke Winkelabhängigkeit je nach Crashtyp auf. Die Winkelabhängigkeiten der verschiedenen Signaturen (Beschleunigungssignatur, Insassen-Schutzsignatur, Insassen-Gefahrensignatur) sind zudem nicht gleichsinnig korreliert. Deshalb ist der Informationsgehalt eines am Kraftfahrzeugtunnel (oder an einer vergleichbaren Stelle) abgenommenen Beschleunigungsvektors für eine richtige Crasherkennung und eine zeitgerechte Auslösung der Insassen-Schutzeinrichtungen, insbesondere bei einem Seitenaufprall, kritisch bis unzureichend.

Weitere, beispielsweise aus der DE 44 25 846 A1 bekannte Insassen-Schutzsysteme, verwenden deshalb zusätzlich zu dem im Auslösesystem selbst erfassten Beschleunigungsvektor, weitere Beschleunigungsvektoren von, beispielsweise in Türholmen, an die Kraftfahrzeugperipherie ausgelagert montierten Messassistenten.

Andere, beispielsweise aus der DE 43 22 488 C2, der WO95/11455 A1 und der DE 100 62 427 A1 bekannte Insassen-Schutzsysteme in Kraftfahrzeugen, verwenden zu der im Auslösesystem selbst erfassten Beschleunigungssignatur zur Crasherkennung und Crashbewertung und den von den Beschleunigungssignatur-Messassistenten erfassten Beschleunigungssignaturen zusätzlich oder alternativ noch Druckaufnehmer in den Türhohlräumen, die Druckverlauf-Signaturen liefern, um dem Auslösesystem relevantere Signaturen seitlicher Crashvorgänge zuzuführen.

Weiterhin sind, beispielsweise aus der DE 198 55 452 A1, der DE 100 12 434 A1, und der DE 100 34 524 A1, Insassen-Schutzsysteme bekannt, die Körperschallsensoren, beispielsweise piezoelektrische Sensoren, verwenden, welche bei einem Crash hochfrequente Karosserieschwingungen aufnehmen, die für eine Analyse der dadurch generierten Frequenzspektrum-Signaturen benutzt werden.

Nachteilig bei diesen bekannten Insassen-Schutzsystemen wirkt sich aus, dass sie zwar die Crasherkennung und Crashbewertung durch das Auslösesystem gegenüber den einfachen Systemen mit lediglich einem zentralen Beschleunigungsaufnehmer schon verbessern, aber bzgl. der dadurch bisher erreichten Crashsensitivität, Crashselektivität, des Aufwandes in Kosten und Konstruktion und insbesondere bzgl. einer zeitgerechten Auslösung noch nicht optimiert sind. Noch immer werden in der Praxis aufgetretene Fehler bei Insassen-Schutzsystemen wie mangelnde Auslösung oder zu frühe oder zu späte Auslösung bei Insassengefährdung, oder unerwünschte Auslösung bei fehlender oder unkritischer Insassengefahrdung bekannt. Die bekannten Verfahren, bzw. Vorrichtungen erfassen mit ihren Sensoren entweder nur jeweils eine Signalart, bzw. leiten diese weiter oder erfordern aufgrund einer Vielzahl verschiedener Baugruppen einen relativ hohen Kostenaufwand. Erschwerend kommen relativ häufig vorkommende Störsignaturen hinzu, für die die bekannten Insassen-Schutzsysteme relativ anfällig sind. Dies sind beispielsweise Vielfachanregungen, wie ausgeschlagene Radaufhängungen, ausgeschlagene Querlenker, Wasserschlag gegen die Karosserie, unbefestigtes Transportgut; oder Einfachanregungen, wie Türschlag, Bruchschock einer Fensterscheibe, Steinschlag gegen die Karosserie und Ver- bzw. Entriegelungsschocks beim Betätigen des Handbremshebels. Diese Störsignaturen überlagern die verschiedenen Signal-Signaturen und können die richtige Interpretation einer Crashsignatur erheblich erschweren und deren Empfindlichkeit herabsetzen. Insbesondere ist die Auslösung der Insassen-Schutzeinrichtungen bei Seiten-Crashs mit einer zu großen zeitlichen Toleranz, d.h. mit einer zu großen Abweichung vom für die Schutzwirkung optimalen Zeitpunkt behaftet, wodurch sich die Schutzwirkung für die Insassen in ungünstigen Fällen erheblich verringern kann.

Weiter ist aus der DE 102 45 780 A1 noch eine Vorrichtung zur Aufprallerkennung bekannt, die am Fahrzeug verteilte, mechanisch nach dem Stimmgabelprinzip wirksame Detektoren, in Verbindung mit einem zentralen Sensor verwendet.

Nachteilig bei der bekannten Vorrichtung wirkt sich aus, dass die (mikro-mechanischen) Detektoren nur zur reinen Schallweiterleitung ohne Verarbeitungsmöglichkeit geeignet sind. Es muss stets (auch im Crashfall) eine ununterbrochene Schallleitung bis zu dem zentralen Sensor gewährleistet sein. Zudem sind für eine hinreichend crash-selektive Auswertung zusätzliche Sensoren, insbesondere ein Aufprall-Sensor, die weitere Signale liefern, kaum verzichtbar.

Aus der gattungsbildenden EP 0 305 654 A2 ist ein Crash-Sensorsystem mit einer Mehrzahl von Körperschallsensören bekannt, die, ebenso wie mehrere Luftschallsensoren (Mikrofone), ihr jeweils erfasstes Sensorsignal als rohes Analogsignal an einen zentralen Multiplex-A/D-Wandler senden, dessen digitale Ausgangssignale von einem zentralen Spektrums-Analysator vorverarbeitet und als vorverarbeitete Signale einem Auslöseprozessor, der über die Auslösung von Insassenschutzeinrichtungen entscheidet, zugeführt werden. Die analoge Signalübertragung ist anfällig für Störsignaturen.

Aus der DE 100 34 524 A1 ist ein vergleichbares System bekannt, das jedoch nicht unmittelbar Crash-bedingte Körperschallsignale erfasst. Vielmehr ist jedem Körperschallsensor ein Impulsgenerator zugeordnet, der wiederholt Fahrzeugbauteile mit definierten Testpulsen anregt. Crash-bedingte Verformungen der Fahrzeugbauteile führen zu Änderungen der Übertragungsstrecke des Körperschallsignals, was sich in einer Veränderung des von den Körperschallsensoren erfassten Frequenzspektrums niederschlägt. Diese Änderungen werden erfasst und zur Bewertung der Crash-Situation ausgewertet.

Weiter ist aus der DE 197 45 309 A1 ein System bekannt, bei dem ein akustischer Leiter das Fahrzeug umspannt, sodass ein Aufprall an beliebiger Stelle des Fahrzeugs von einem zentralen Körperschallsensor, dem ein resultierendes Schallsignal von dem Leiter zugeleitet wird, erfasst werden kann.

Schließlich sind aus der EP 1 306 269 A2 zwei Varianten eines Systems zur Crash-Detektion auf Basis von Beschleunigungsmessern bekannt. Bei einer offenbarten Variante, werden Signale einzelner Beschleunigungssensorelemente direkt, analog an eine zentrale Steuereinrichtung zur dortigen Digitalisierung und Auswertung geleitet. Bei einer anderen Variante sind mehrere Beschleunigungssensorelemente zu in einer Beschleunigungssensoreinheit zusammengefasst, in der zudem die Digitalisierung und Auswertung im Sinne eines Schwellenwertvergleichs erfolgt. Das Vergleichsergebnis wird als Messsignal sodann an die zentrale Steuereinrichtung geleitet.

Aufgabe der vorliegenden Erfindung ist es, die bekannten Verfahren und Vorrichtungen zur Aktivierung von Insassen-Schutzeinrichtungen in einem Kraftfahrzeug bei Crashfällen so zu verbessern, dass die verschiedenen möglichen Crashs und Crashtypen in kürzerer Zeit sicher bestimmt werden, dass die entsprechenden Insassen-Schutzeinrichtungen im Crashfall mit einer geringeren zeitlichen Toleranz ausgelöst werden, so dass eine möglichst hohe Schutzwirkung der Insassen-Schutzeinrichtungen erzielt wird, und dass Fehlfunktionen vermieden werden.

Die Aufgabe wird erfindungsgemäß in Verbindung mit dem Oberbegriff des Anspruchs 1 dadurch gelöst, dass jeder Crash-Sensor mehrere weitere Sensorelemente umfasst, mit denen diverse physikalische Einwirkungen auf die Fahrzeugkarosserie erfassbar sind, und
dass jeder Crash-Sensor weiter eine ein Mikroprozessorsystem umfassende Vorverarbeitungseinrichtung aufweist, die von den Sensorelementen erzeugte Signaturen unmittelbar an den Crash-Sensor-Montagestellen vorverarbeitet.

Die Aufgabe wird weiter in Verbindung mit den Merkmalen des Oberbegriffs von Anspruch 13 dadurch gelöst, dass jeder Crash-Sensor mehrere weitere Sensorelemente umfasst, mit denen diverse physikalische Einwirkungen auf die Fahrzeugkarosserie erfassbar sind, und
dass jeder Crash-Sensor weiter eine ein Mikroprozessorsystem umfassende Vorverarbeitungseinrichtung aufweist, mit der von den Sensorelementen erzeugte Signaturen unmittelbar an den Crash-Sensor-Montagestellen vorverarbeitbar sind.

Bevorzugte Ausführungsformen der Erfindung sind in den Unteransprüchen dargelegt.

Kraftfahrzeugkarosserien reagieren auf äußere Einwirkungen wie Verformungen, strukturelle Spannungen oder andere Beanspruchungen mit Stresssignalen, die sich mit Geschwindigkeiten von bis zu 6000 m/s über die Fahrzeugkarosserie ausbreiten. In Versuchsreihen hat sich gezeigt, dass die Stresssignale, die durch insassengefährdende Crashfälle - mit entsprechend großen Karosserie-Beanspruchungen - verursacht werden, sich besonders in Körperultraschall-Signalen manifestieren und dort zu charakteristischen Crash-Signaturen, d.h. zu charakteristischen Signalbildern bzgl. Amplitude, zeitlichem Verlauf und Frequenzspektrum führen. Diese liegen etwa in einem Frequenzbereich zwischen 10⁵ - 10⁸ Hz, was bei einer Ausbreitungsgeschwindigkeit von 6000 m/s Longitudinal-Wellen mit Wellenlängen in Stahl von 60 - 0,06 mm entspricht. Durch ein Abgreifen dieser Stressinformationen mit den peripheren Crash-Sensoren direkt an der Karosserie, und einer schnellen Verarbeitung der Signale, vorzugsweise über ein Datenbus-System, im Idealfall mit einer "online" - Verarbeitung, sind wesentlich verkürzte Auslöseentscheidungen im Vergleich zu den herkömmlichen Verfahren realisierbar.

In den Crash-Sensoren werden die erfassten Signale mit einer entsprechenden Elektronik vorverarbeitet und in das Datenbus-System eingespeist, so dass das Auslösesystem bereits weitestgehend störungsfreie Signaturen erhält, wodurch die Crasherkennung vereinfacht und die Crash-Selektivität, bzw. -sensitivität erhöht wird. Der einzelne Crash-Sensor erfasst physikalisch diverse crash-relevante Signaturen, insbesondere eine Körperultraschall-Signatur an der Montagestelle des Sensors, verarbeitet diese vor und hält sie über den Datenbus für das Auslösesystem bereit.

Das Auslösesystem bewertet mit seinem Crash-Algorithmus die über die Datenbus - Verbindungen vom Crash-Sensorensystem übernommenen Crash-Signaturen auf Art, Intensität und Zeit der Gefährdung der Insassen, bzw. Insassenplätze, und löst bei einer Gefährdungsschwellenüberschreitung relevante aktivierbare Insassen-Schutzeinrichtungen aus. Bei der Bestimmung der Gefährdungsschwelle wird die Insassengefahren-Signatur, in die im Wesentlichen der maximal mögliche Bremsweg des Insassenkörpers eingeht, herangezogen. Zur Festlegung des geeignetsten Auslösezeitpunktes werden dem Auslösesystem, vorzugsweise in abgespeicherten Parameterfeldern abgelegte, Daten über die auslösezeitpunktabhängige Schutzleistungsfähigkeit der einzelnen Schutzeinrichtungen und deren zugeordnete Schutzstufen zur Verfügung gestellt.

Das Auslösesystem, vorzugsweise im Fahrzeug zentral angeordnet, kann über eine Auslöseelektronik, bzw. über eine Verbindung mit einem zentralen Steuergerät Zeitsynchronmarken austauschen. Dadurch kann der Crashalgorithmus besonders effektiv die Crashsignaturen aufbereiten und auswerten. Ein Crashereignis an der Fahrzeugkarosserie kann anhand der Ortung der durch den Crash erzeugten Schallquelle über die Laufzeitunterschiede der an den einzelnen peripheren Crash-Sensoren gemessenen Schall-Signale, mit Hilfe der Zeitsynchronmarken lokalisiert werden. Durch die Ausnutzung der hohen Signalausbreitungsgeschwindigkeiten über die Fahrzeugkarosserie ist dies wesentlich schneller möglich als bisher; da bisher nur Schallausbreitungen mit der Schallgeschwindigkeit in Luft (etwa 330 m/s) registriert wurden. Durch die Datenerfassung und Vorverarbeitung mit den peripheren Sensoren direkt an der Karosserie, bzw. den Montageorten entfällt die Winkelabhängigkeit der Signale, die bei der bisherigen Verwendung zentraler Sensoren auftritt und dort für Verzögerungen sorgt.

Für die Crash-Identifizierung wird dann die Signal-Signatur herangezogen. Aus den sich ausbreitenden Körperschallinformationen ist die gezielte Auswertung des Ultraschallbereichs besonders effektiv. Unterschiedliche physikalische Ursachen erzeugen unterschiedliche Signaturen: Beispielsweise kann ein burstartiges Signal im Bereich von 10⁷ Hz, dass sich durch einen starken Peak, der anschließend schnell gedämpft wird kennzeichnet, auf eine Korngrenzenwanderung im Stahl hindeuten, die wiederum zu einer plastischen Verformung an der Karosserie führt. Elastische Verformungen liegen hingegen eher im Bereich von 10⁶Hz. Ein struktureller Riss äußert sich eher in einer sinusartigen Kurve. Die ständig erzeugten Betriebsgeräusche generieren dagegen ein kontinuierliches Rauschen im Schallspektrum.

Für die Aufbereitung der Körperultraschall-Emissionssignale (typischerweise im Bereich von 0,5 bis 5 MHz) kann auf an sich bekannte Methoden zurückgegriffen werden: Für eine Signal-Entrauschung und Komprimierung kommen Wavelet-Transformationsverfahren in Betracht. Die Erkennung und Ausgrenzung von Artefakten (nicht crash-relevante Signale) kann mit sogenannten Evolutionären Algorithmen und mit Hilfe von Fuzzy-Logic-Systemen erfolgen. Zur Crash-Zeitpunkterkennung können sogenannte Pickelalgorithmen verwendet werden.

Insbesondere ist im Vergleich zu den bisherigen Verfahren durch die schnelle und sichere Auswertung der Körperultraschall-Crash-Signaturen eine Seitenairbagauslösung im frühen Crashverlauf möglich, wodurch eine nur minimale Reduktion des Körperbremsweges und der Körperbremszeit gewährleistet wird. Die Selektionsqualität bei Front-/Heckcrashs sowie bei Seiten-/Frontcrashs wird erhöht. Die Crash-Sensierung im unteren Geschwindigkeitsbereich wird zuverlässiger. Die Crash-Sensierung im oberen Geschwindigkeitsbereich ist im frühen Crashverlauf möglich, wodurch auch hier eine nur minimale Reduktion des Körperbremsweges und der Körperbremszeit gewährleistet wird. Die Erfüllung der Anforderungen an Qualität und Zuverlässigkeit des Auslösesystems gemäss IEC DIN 61508 SIL 2/3 ist dabei jederzeit sichergestellt.

Mit Hilfe der Körperultraschall-Signale sind zudem verformende und nicht verformende Ereignisse, die in anderen Frequenzbereichen emittieren - beispielsweise verursachen Schwingungen durch lose Teilchen, Strömungsprozesse oder Erschütterungen hauptsächlich Emissionen im Hör- und Infraschalbereich (10⁻¹ - 10⁴ Hz) - besser unterscheidbar. Dadurch wird die Gefahr von unerwünschte Auslösungen, bzw. Fehlauslösungen, insbesondere der Airbags, bei für die Insassen ungefährlichen Ereignissen, verringert.

Gemäß einer bevorzugten Ausführungsform der Erfindung zieht das Auslösesystem zur Bestimmung der Insassen-Gefahrensignaturen und der GefährdungsSchwellwertüberschreitungen mindestens zwei verschiedenartige Crash-Signaturen heran, und führt an diesen Crash-Signaturen eine Plausibilitätsprüfung durch.

Das Auslösesystem kann für die Bestimmung der Insassen-Gefahrensignaturen und der Gefährdungsschwellwertüberschreitungen verschiedenartige Signale, beispielsweise die Körperultraschall-Signatur und eine Beschleunigungs-Signatur heranziehen, die mit den Crash-Sensoren erfasst und vorverarbeitet sind, und an diesen Signaturen eine Plausibilitätsprüfung durchführen. Dadurch arbeitet das Verfahren bei allen denkbaren Crashfällen mit einer noch höheren gleichbleibenden Zuverlässigkeit und einer noch weiter verringerten Störanfälligkeit. Grundsätzlich ist auch die Berücksichtigung weiterer Signaturen, beispielsweise von Druckveränderungen in Hohlräumen, Temperaturveränderungen, u.s.w. denkbar, um die Zuverlässigkeit des Verfahrens noch weiter zu optimieren. Durch eine höhere Wichtung der Körperultraschall-Signatur mit einer einstellbaren Priorität gegenüber den anderen Signaturen kann dabei die zeitliche Toleranz bei der Bestimmung der Crasherkennung und der Auslösezeitpunkte für die Insassen-Schutzeinrichtungen, insbesondere bei seitlichen Crashvorgängen optimiert werden. Weiterhin kann eine permanente Systemeigendiagnose des Auslösesystems, beispielsweise mittels der durch das bewegte Fahrzeug ständig erzeugten Körperschallgeräusche oder/und der Körperbeschleunigungsgeräusche vorgesehen sein. Dadurch wird die Betriebssicherheit des Auslösesystems erhöht.

Neuere Schutzeinrichtungen sind in ihrer Aktivierungs- und in ihrer Schutzcharakteristik steuerbar, beispielsweise durch eine Begrenzung ihrer Gurtstraffstärke bei einem Gurtssystem oder durch einen mehrstufigen Gasgenerator bei einem Airbagsystem. Derartige Schutzeinrichtungen können über den Crash-Algorithmus, bzw. das Auslösesystem, in ihrer Schutzwirkung auf das Maß der Insassengefährdung eingestellt werden und verbessern somit die Effektivität der Insassen-Schutzeinrichtungen noch weiter. Insbesondere kann ein Gurtstraffsystem mit einer an eine bestimmte Insassengefährdung und Gefährdungsschwellwertüberschreitung angepassten variierbaren Gurtstraffkraft angesteuert werden, und ein Airbagsystem kann mit einer an eine ermittelte Crashschwere angepassten variierbaren Entfaltungsstärke angesteuert werden. Weiterhin kann auch die Deaktivierung ausgelöster Insassen-Schutzeinrichtungen aktiv geregelt sein: Ein gestraffter, bzw. verriegelter Gurt reduziert die Bewegungsfreiheit und ein aktiver Airbag begrenzt zusätzlich die Sicht des Insassen. Diese Schutzeinrichtungen sind deshalb so gestaltet, dass sich nach der notwendigen Schutzwirkungsdauer von selbst die Gurtverriegelung löst und der Airbag entleerend in sich zusammenfallt. Die Deaktivierung der Insassen-Schutzeinrichtungen kann grundsätzlich weiter verbessert werden, dadurch, dass der Crash-Algorithmus aktiv das Ende der notwendigen Schutzdauer feststellt und dann eine entsprechende Information an das Auslösesystem weitergibt, so dass die Schutzeinrichtungen frühestmöglicht deaktiviert werden.

Mit dem Crash-Sensorensystem ist eine schnellere und zuverlässigere Lokalisierung und Auswertung eines Crashereignisses als bisher möglich. Das Crash-Sensorensystem besteht aus mindestens drei gleichartigen multifunktionalen Crash-Sensoren, die am Fahrzeug an signatur- und/oder schutzrelevanten Stellen peripher, vorzugsweise seitengleich an den Säulen und zentral, vorzugsweise als Bestandteil des zentral am Fahrzeugtunnel angeordneten Auslösesystems, verteilt sind. Als vorteilhafte Montagestellen der Crash-Sensoren kommen insbesondere die A-Säulen in Kombination mit einer zentralen Einbaustelle (Fahrzeugtunnel) sowie die B- und C-Säulen in Betracht. Die mit bis zu 6000 m/s sich über die Karosserie ausbreitenden Stress-Signale können mit dem Sensorensystem direkt an den Montagestellen vorverarbeitet und an das zentrale Auslösesystem, vorzugsweise über ein Datenbus-System, weitergeleitet werden. Insbesondere durch erfasste Körperultraschall-Signaturen, können Seitencrashs (seitliche Aufprall-Unfälle), bei denen bisher ein eher verzögerter Funktionsablauf im Auslösesystem der Fall war, besonders schnell ausgewertet werden. Dies führt zu einer schnelleren Auslöseentscheidung und damit zu einer geringeren zeitlichen Toleranz bei der Crasherkennung und Aktivierung der Schutzeinrichtungen.

Bevorzugt ist ein Crash-Sensor so ausgestaltet, dass ein, über einen signalleitenden Träger plastisch an die Fahrzeugkarosserie ankoppelbares, Gehäuse aus einem zylindrischer Hohlkörper ausgebildet ist, mit einer Steckverbindung, die mit einem an der Fahrzeugkarosserie angeordneten Kupplungselement verbindbar ist, und mit mindestens einem, der Steckverbindung zugeordneten sensitiven Element, das auf einer Elektronikplatine innerhalb des Gehäuses, mit dem Träger wirkverbunden, angeordnet ist.

Der Crash-Sensor ist mit der plastischen Ankopplung mit der Fahrzeugkarosserie verbindbar. Über eine oder mehrere Montageschnittstelle(n) für die plastische Ankopplung gelangen insbesondere Körperultraschall-Signaturen in den Träger und durchlaufen diesen. Beim Passieren der Position des sensitiven Elementes, wird in diesem ein intensitätsproportionales Signal erzeugt, das einer Elektronik zugeführt wird, die den Signalverlauf verarbeitet und das bearbeitete Signal dem Auslösesystem zur Bewertung zur Verfügung gestellt. Weiterhin können über das sensitive Element und/oder mit weiteren in dem Gehäuse angeordneten sensitiven Elementen auch andere Signaturen, beispielsweise Beschleunigungen, Temperaturänderungen, Druckänderungen u.a., erfasst werden. Das sensitive Element kann als ein schallimpedanzmäßig mit dem Träger verbundenes Longitudinalwellen-Sensorelement aus Piezoxid ausgebildet sein, und mit Mehrfach-Druckzungen unterschiedlicher Resonanzfrequenz an der Elektronikplatine kontaktiert sein. Dadurch wird eine besonders hohe Körperschall-Sensitivität erreicht und eine einfache und zuverlässige Kontaktierung gewährleistet. Durch die Gestaltung des sensitiven Elementes in Form und Querschnitt sowie durch die Montageschnittstellenanzahl- und orte, kann die Empfindlichkeitscharakteristik und der Frequenzgang der Körperultraschall-Sensierung des Crash-Sensors mit beeinflusst werden. Der Träger kann mit dem Gehäuse einstückig verbunden sein. Eine einstückige Ausbildung von Träger und Gehäuse wirkt sich günstig auf die Herstellungskosten aus und ermöglicht eine besonders kompakte und robuste Bauform des Sensors. Ein wasserdichter Abschluss des am Fahrzeug angeordneten Gehäuses kann die Betriebssicherheit und Lebensdauer des Sensors weiter erhöhen.

Der Crash-Sensor ermöglicht über seine mechanische Schnittstelle zur Fahrzeugkarosserie eine schnellere Akquisition von physikalisch diversen Crash-Signaturen, insbesondere Körperschall - weitere Signalarten sind beispielsweise Beschleunigung, Temperaturänderung, Druckänderung - durch die direkte Abnahme an peripherienahen und zentralen Stellen, die für den Schutz der einzelnen Insassen, insbesondere bei Seitencrashs, bei besonders hohen Geschwindigkeiten oder für eine richtige Gefährdungsbeurteilung bei besonders niedrigen Geschwindigkeiten, vorrangig sind. Dadurch wird die Crashsensitivität und die Crashselektivität verbessert. Dadurch, dass der Crash-Sensor physikalisch diverse Signaturen messen und verarbeiten kann, sind keine unterschiedlichen speziellen Sensoren zur Erfassung verschiedenartiger Signale mehr nötig. Dadurch kann insgesamt die Baugruppenvielfalt in Insassen- Schutzeinrichtungen reduziert werden, was zu verringerten Kosten beim Serienpreis führt oder den Serienumfang eines Insassen-Schutzsystems, beispielsweise durch zusätzliche Airbags im Kniebereich oder Kopfstützenbereich bei gleichbleibenden Kosten wesentlich erhöhen kann.

Bevorzugt ist mindestens ein crash-relevantes Strukturelement an der Fahrzeugkarosserie aus einem oder mehreren Materialien mit einer erhöhten Körperultraschall-Sensitivität bei einer plastischen Verformung gefertigt ist, und/oder dass dieses Strukturelement mit einem derartigen Material legiert, beschichtet, plattiert, verstärkt oder dotiert ist.

Durch relativ einfache konstruktive und/oder technologische Maßnahmen an crashsignifikanten Standardstrukturelementen des Kraftfahrzeuges kann die Qualität der im Crashfall erzeugten und zur Crasherkennung herangezogenen Signaturen weiter gesteigert werden. Durch einen Crashvorgang im Kraftfahrzeug generierter Körperschall und insbesondere Ultraschall ist besonders geeignet, die Crasherkennungsselektivität zu erhöhen. Die Generierung von Ultraschall bei einem Crash in Strukturelementen des Kraftfahrzeuges ist in hohem Maße abhängig von deren Form und deren Material. Besonders vorteilhaft ist es deshalb, für crashsignaturrelevante Strukturelemente Materialien mit spezifizierter Signalcharakteristik anzuwenden. In Versuchen haben sich als besonders geeignet Bauteile aus kaltgewalzten Tiefziehstählen, bzw. kaltgewalzte legierte Tiefziehstähle mit spezifizierter erhöhter Ultraschall-Signalcharakteristik bei Verformung herausgestellt. Besonders geeignet sind auch ganzflächig oder flächenpartiell mit Partikeln präparierte Strukturelemente mit bei Verformung selektiv auftretender spezifizierter Ultraschall-Signalcharakteristik. Auch kann durch eine spezielle Formgebung die Körperultraschall-Sensitivität weiter verbessert werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

Es zeigen
- Figur 1:: Ein Blockschema eines Insassenschutz-Systems mit peripheren Crash-Sensoren,
- Figur 2:: eine schematische Seitenansicht einer vereinfacht dargestellten ersten Ausführungsform eines peripheren Crash-Sensors im Schnitt, a) vor der Montage an der Fahrzeugkarosserie offen, b) nach der Montage an der Fahrzeugkarosserie geschlossen,
- Figur 3:: ein Funktionsblockschema eines peripheren Crash-Sensors,
- Figur 4:: Ein Funktionsblockschema zur Sensierung von Körperultraschall-Emissionen in den peripheren Crash-Sensoren,
- Figur 5:: ein Blockschema zur Entstehung von Körperultraschall-Emissionen,
- Figur 6:: eine zweite Ausführungsform des peripheren Crash-Sensors mit Details zur Körperultraschall-Erfassung, a) in einer Seitenansicht im Schnitt, b) in einer Draufsicht im Schnitt und
- Figur 7:: eine dritte Ausführungsform des peripheren Crash-Sensors mit Details zur Körperultraschall-Erfassung, a) in einer Seitenansicht im Schnitt, b) in einer Draufsicht im Schnitt.

Eine Vorrichtung zur Aktivierung von Insassen-Schutzeinrichtungen 3, 3', 3", 3''' in einem Kraftfahrzeug, besteht im Wesentlichen aus einem Crash-Sensorensystem 1 mit mindestens drei peripheren Crash-Sensoren 2, 2', 2" und einem Auslösesystem 4.

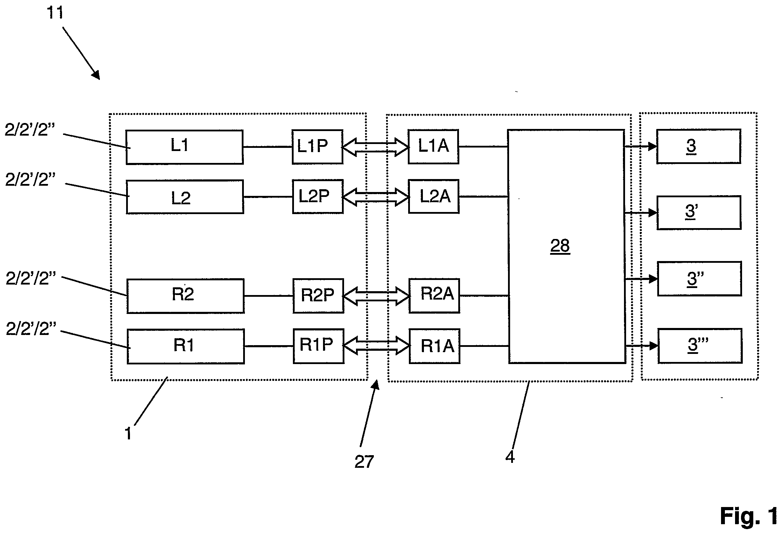

Fig. 1 zeigt ein Insassen-Schutzsystem 11, das mit einem Crash-Sensorensystem 1 mit vier peripheren Crash-Sensoren 2, 2', 2" ausgebildet ist. Dabei ist ein als L1 bezeichneter erster Sensor 2, 2', 2' an einem Türanker vorne links , ein als L2 bezeichneter zweiter Sensor 2, 2', 2' an einem Türanker hinten links, ein dritter Sensor R1 an einem Türanker vorne rechts und ein vierter Sensor R2 an einem Türanker hinten rechts vorgesehen. Die Sensoren L1, L2, R1, R2 sind vorteilhaft an Strukturelementen aus kaltgewalztem Tiefziehstahl angeordnet, die in Material und Formgebung besonders körperultraschallsensitiv ausgebildet sind und die an den entsprechenden Stellen der Fahrzeugkarosserie 21 angeordnet, bzw. ausgebildet sind.

Das Crash-Sensor-System 1 ist über ein Sicherheits-Datenbus-System (SI-Datenbus) 27 mit dem Auslösesystem 4 verbunden. In dem Datenbus-System 27 ist den einzelnen Sensoren sensorseitig jeweils eine serielle Schnittstelle L1P, L2P, R1P, R2P und auslösesystemseitig jeweils eine serielle Schnittstelle L1A, L2A, R1A, R2A zugeordnet. Über eine Auslöseelektronik 28 des Auslösesystems 4 sind die verschiedenen in dem Insassen-Schutzsystem 11 des Fahrzeugs vorgesehenen Insassen-Schutzeinrichtungen 3, 3', 3", 3''' ansteuerbar.

Ein Crash-Sensor 2, 2', 2" besteht im Wesentlichen aus einem Gehäuse 22, in dem ein sensitives Element 36 angeordnet ist, das über das Gehäuse 22 mit einer Fahrzeugkarosserie 21 wirkverbunden ist.

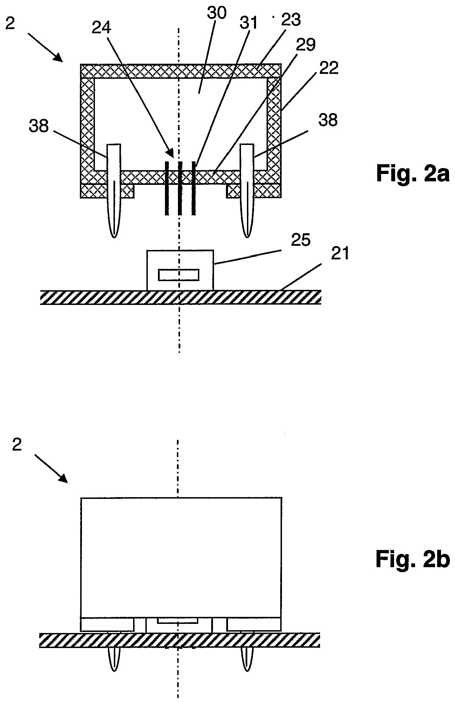

In einer vereinfachten Darstellung des Sensors 2 in Fig. 2a ist das Gehäuse 22 als ein zylindrischer Hohlkörper mit einem Innenraum 30 mit freien Hohlräumen ausgebildet, mit einer Bodenplatte 39 als Teil des Gehäuses 22, in die drei Stahlhülsen 38 auf einem Kreis mit einem Winkelabstand von 120° eingefügt sind. Die Stahlhülsen 38 ragen sensorseitig in den Hohlraum 30 des Hohlkörpers 22 hinein und durchgreifen karosserieseitig die Bodenplatte 29. Auf der Seite des Hohlraums 30 sind sie dicht abgeschlossen. Auf der dem Hohlraum 30 abgewandten Seite sind die Stahlhülsen 38 mit Längsschlitzen gefedert. Das Gehäuse 22 ist vorteilhaft aus einem, in einem Spritzgussverfahren hergestellten, Kunststoffkörper ausgebildet und mit einem Deckel 23 über eine Laserschweißverbindung 26 dicht verschließbar. Die gefederten Stahlhülsen 38 greifen in montiertem Zustand (Fig. 2b) in entsprechende Bohrungen der Fahrzeugkarosserie 21 ein und bilden mit dieser eine mechanische Verbindung. Weiterhin ist an der Bodenplatte 29 eine Steckverbindung 24 angeordnet, deren, vorteilhaft als Einpressstifte 31 ausgebildete elektrische Kontakte, die Bodenplatte 29 durchragen. Im montierten Zustand ist die Steckverbindung 24 mit einer an einem signatur- bzw. insassenschutzrelevanten peripheren Abschnitt der Fahrzeugkarosserie 21 angeordneten Kupplungselement 25 verbunden.

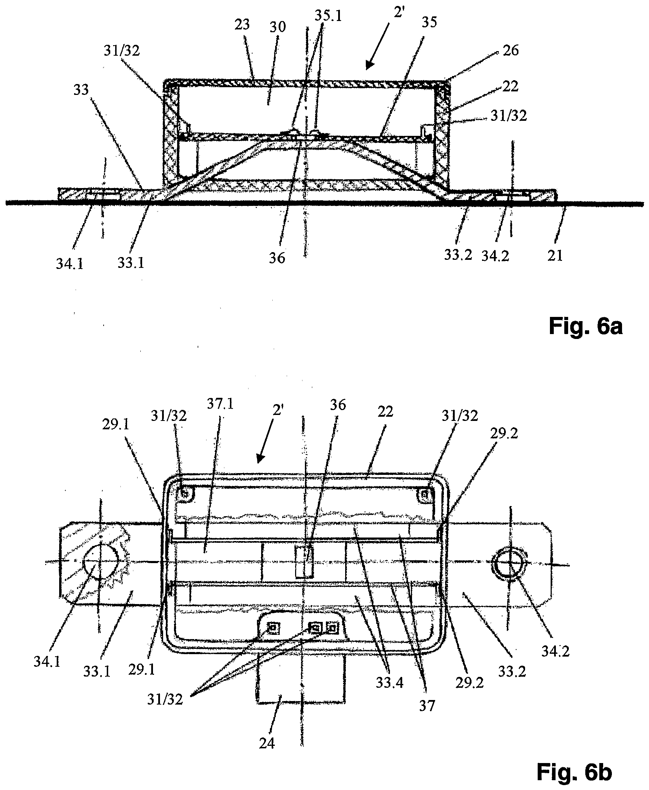

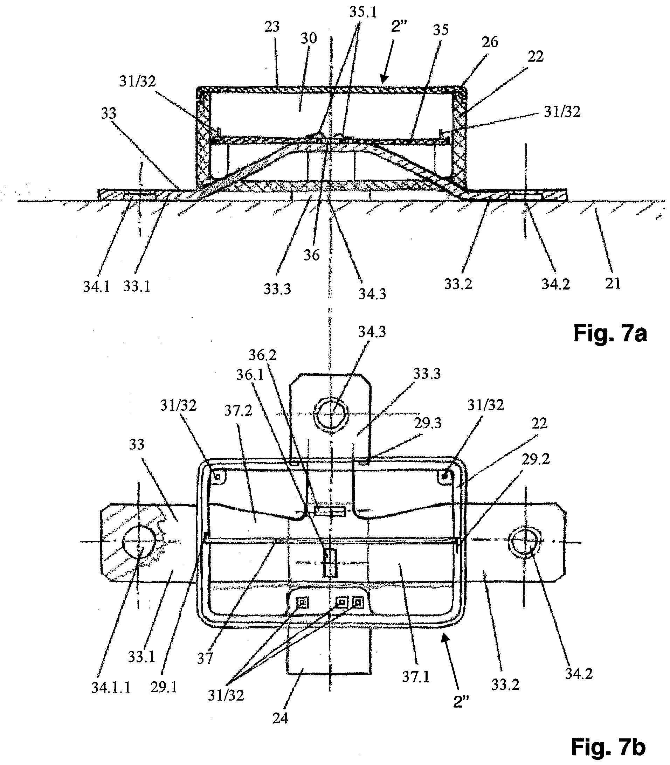

Die Figuren 6+7 zeigen beispielhaft konstruktive Ausführungsformen des multifunktionalen Crash-Sensors, wobei ausführlich der erfindungsgemäße Anteil zur Erfassung der Körperultraschall-Signatur gezeigt ist.

In einer zweiten Ausführungsform 2' des Crash-Sensors (Fig. 6a+b) ist das Gehäuse 22 über einen signalleitenden Träger 33 plastisch an die Fahrzeugkarosserie 21 angekoppelt. An dem Träger 33 sind zwei Ansätze 33.1, 33.2 mit Bohrungen, als Montageschnittstellen 34.1, 34.2 ausgebildet, über die der Träger 33 an die Karosserie 21 plastisch ankoppelbar ist. Die Schnittstellen 34.1, 34.2 können beispielsweise als Verschraubungen, Verstiftungen oder Vernietungen ausgebildet sein. Über zwei Verankerungen 29.1, 29.2 ist das Gehäuse 22 an dem Träger 33 gehaltert. Auf dem Träger 33 ist eine Elektronikplatine 35 auf zwei Stabilitätsstegen 33.4 angeordnet und mit einer Einpressverbindung 32 mit Einpressstiften 31 befestigt und elektrisch mit der Steckverbindung 24 kontaktiert. Die Steckverbindung 24 ist seitlich aus dem Gehäuse 22 herausgeführt. In die Elektronikplatine 35, beispielsweise eine SMD-Baugruppe auf mehrlagiger durchkontaktierter Druckschaltung, ist das sensitive Element 36, beispielsweise ein Longitudinalwellen-Sensorelement aus Piezoxid integriert und mit dem Träger 33 schallimpedanzmäßig verbunden. Das Sensorelement 36 ist vorteilhaft durch einen Aufdampfprozess aufgebracht und mit Druckkontaktfedern 35.1 mit Mehrfach-Druckzungen unterschiedlicher Resonanzfrequenz mit der Platine 35 kontaktiert. Die Vorspannung der Mehrfach-Druckzungen und die Befestigung der Platine erfolgt vorteilhaft durch schrägbiegen überstehender Enden der Einpressstifte 31. Die Einpressstifte 31 sind ihrerseits ausziehfest und dicht mit dem Gehäuse 22 verbunden. Zur Schallwegentkopplung eines Schallweges 37.1 zwischen den Ansatzstücken 33.1, 33.2, sind zwei Schlitze 37 vorgesehen.

In einer dritten Ausführung 2" des Crash-Sensors ist der Träger 33 mit drei Ansatzstücken 33.1, 33.2, 33.3 und den entsprechenden Montageschnittstellen 34.1, 34.2, 34.3 in einer Dreiecksform ausgebildet und mit drei Verankerungen 91.1, 29.2, 29.3 am Gehäuse 22 gehaltert (Fig. 7a+b). Die Schallentkopplung zwischen dem Schallweg 37.2, d.h. zwischen den Ansatzstücken 33.1 / 33.2, bzw. 33.3 ist hier mit nur einem Schlitz 37 realisiert. Beiderseits des Schlitzes 37 sind zwei, bzgl. ihrer Längsachse orthogonal ausgerichtete Sensorelemente 36.1, 36.2 angeordnet. Während der Sensor 2' eine cosϕ - Empfindlichkeitscharakteristik aufweist, ergeben sich bei dem Sensor 2" zwei um 90° versetzte cosϕ - Empfindlichkeitscharakteristika.

Stress-Signale der Fahrzeugkarosserie 21 werden über die mechanische Verbindung des Sensors 2', 2", 2" mit der Karosserie 21 auf das Sensorelement 36 übertragen und durch dieses in elektrische Spannungen umgewandelt. Die Spannungen werden in der Elektronik 35 vorbehandelt, von der Steckverbindung 24 abgegriffen und zur weiteren Verarbeitung über dem Auslösesystem 4 über den Datenbus 27 zur Verfügung gestellt.

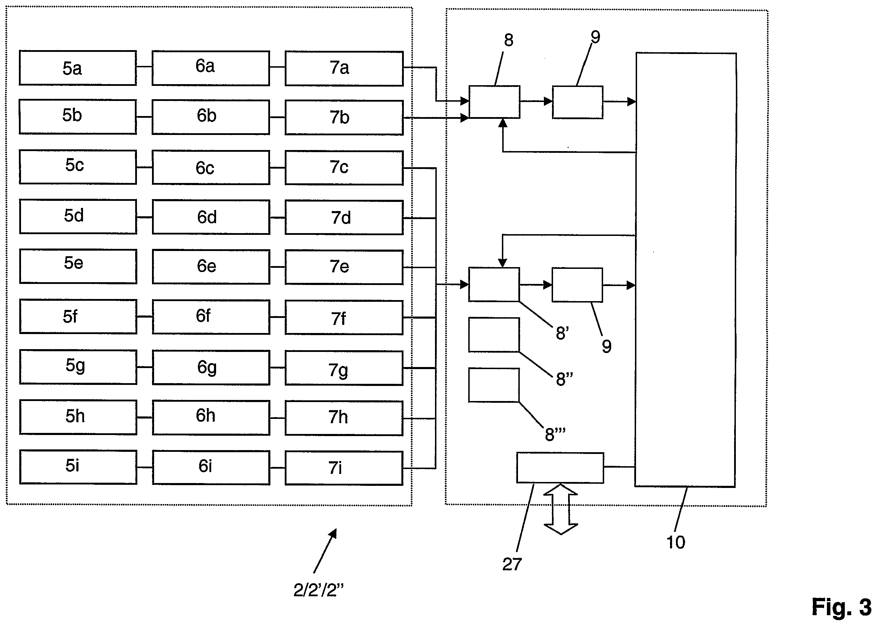

Der Sensor 2, 2',2" ermöglicht (mit dem(n) entsprechenden sensitiven Element(en)) die Aufnahme verschiedener physikalischer Einwirkungen auf das Fahrzeug. Dies wird in einem Funktionsblock-Schema in Fig. 3 angedeutet. Die einzelnen Funktionsblöcke sind ein Körperultraschall-Sensor 5a, ein Körperschall-Sensor 5b, ein BeschleunigungsSensor 5c, ein Vibrations-Sensor 5d, ein Strukturmasse-Sensor 5e ein Dehnungs- und Torsions-Sensor 5f, ein Magnetfeldänderungs-Sensor 5g, ein Temperaturänderungs-Sensor 5h und ein Gyro-Sensor 5i. Jedem Sensor 5a-i ist ein Vorverstärker 6a-i und ein Frequenz-Filter 7a-e nachgeschaltet. Körperschall und Körperultraschall werden in einem Modus-Scanner 8 ausgelesen und über einen AD-Wandler 9 an ein Mikroprozessor-System 10 weitergeleitet. Die übrigen Signaturen werden über weitere Scanner 8' der einzelnen Signaltypen abgetastet und über einen zweiten AD-Wandler 9 in das Mikroprozessor-System 10 eingelesen. Schließlich ist noch ein Scanner 8" für die Filtereinstellungen der Frequenzfilter 7a-i sowie ein Scanner 8''' für die Vorverstärkereinstellungen der Vorverstärker 6a-i vorgesehen.

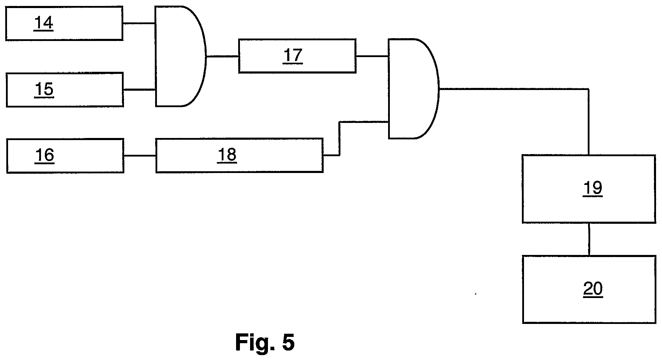

Die verschiedenen Parameter, die zur Entstehung von Körperultraschall, also hochfrequenten Schwingungen an der Fahrzeugkarosserie 21 beitragen, sind in Fig. 5 verdeutlicht. Die Werkstoffeigenschaften 14 und die Umgebungsbedingungen 15 erzeugen ein bestimmtes Werkstoffverhalten 17. Eine Überbeanspruchung 16 an der Karosserie mit einer folgenden Überschreitung der mechanischen Spannungsfestigkeit 18 führt dann zu einer plastischen Verformung 19, die eine Schallquelle erzeugt und sich in einer burstartigen Wellenausbreitung 20 fortsetzt. Das Werkstoffverhalten kann gezielt zur Sensierung von Körperultraschall-Signaturen ausgenutzt werden. Dazu werden crashrelevante Strukturelemente aus einem Material mit erhöhter Körperultraschall-Sensitivität, vorteilhaft kaltgewalzter Tiefziehstahl, teilweise oder vollständig gefertigt oder mit solchen Partikeln präpariert.

Ein Verfahren zur Aktivierung von Insassen-Schutzeinrichtungen 3, 3', 3", 3''' in einem Kraftfahrzeug beruht im Wesentlichen auf der Auswertung von Körperultraschall-Signaturen und ggf. zusätzlicher Signal-Signaturen. Das erfindungsgemäße Verfahren wird vorteilhaft mit dem nach Fig. 1 beschriebenen Schutzsystem 11 mit dem erfindungsgemäßen Crash-Sensor-System 1, bzw. dem erfindungsgemäßen Crash-Sensor 2, 2', 2", durchgeführt.

In einem ersten Verfahrensschritt werden die durch Einwirkungen auf die Fahrzeugkarosserie 21 erzeugten Signaturen mittels des Crash-Sensorensystems 1, bestehend aus den multifunktionalen Crash-Sensoren L1, L2, R1, R2 unmittelbar an den Montagestellen erfasst und vorverarbeitet und dem Auslösesystem 4 zur Verfügung gestellt.

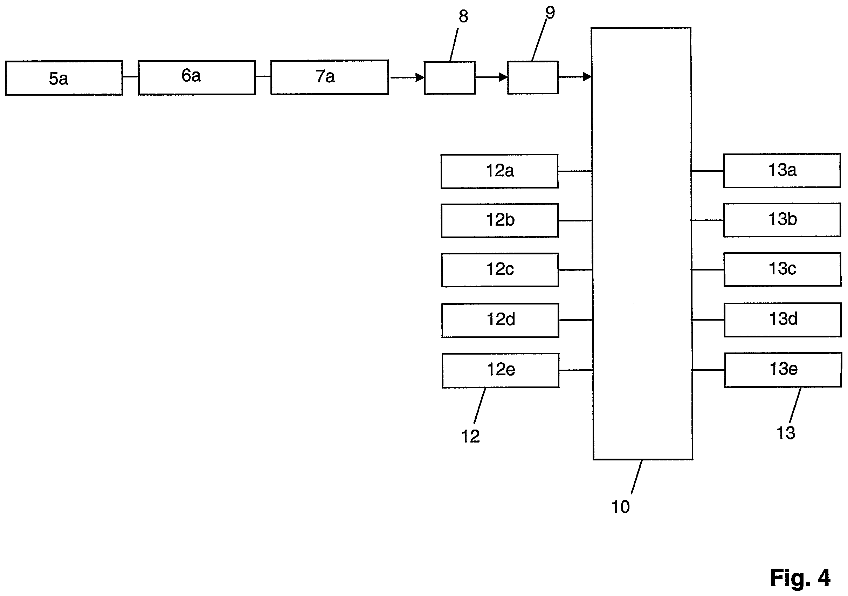

In einem zweiten Schritt werden die eingelesenen digitalisierten Signaturen in dem Mikroprozessor-System 10 nach Art, Intensität, Richtung und Zeit von Crash-Signaturen und/oder Insassen-Gefahrensignaturen mit einem Crashalgorithmus ausgewertet. Anhand von mehreren Signaturen können dabei Plausibilitätsprüfungen durchgeführt werden. Die Datenverarbeitung ist beispielhaft für die Sensierung der Körperultraschall-Emissionen in Fig. 4 demonstriert. Der Crashalgorithmus verwendet verschiedene Softwareprogramme 12a-e für den Systembetrieb des Crash-Sensorensystems 1, für die Erfassung der Körperultraschallsignale, für die Erkennung von Artefakten (beispielsweise Störsignale), für die Erkennung der Signalursache und für die Crash-Erkennung. Dem Mikroprozessor-System 10 sind verschiedene Speicher 13a-e zugeordnet, in denen Charakteristika von Körperultraschall-Emissionen, Artefakte und Struktur der Fahrzeugkarosserie 21 abgelegt sind. Der Speicher 13e enthält insbesondere Parameterfelder für die auslösezeitabhängige Insassen-Schutzleistungsfähigkeit verschiedener Schutzstufen der Insassen-Schutzeinrichtungen (3, 3', 3", 3'''). Der Speicher 13d ist als ein allgemeiner Datenspeicher vorgesehen. Der Crashalgorithmus wendet die Softwareprogramme 12a-e auf die eingehenden Signale an und bewertet sie mit Hilfe der in den Speichern 13a-c abgelegten charakteristischen Daten nach Art und Schwere der Einwirkung. Dabei werden Körperultraschall-Signaturen vorrangig behandelt. Über die Laufzeitunterschiede (Messung mit Hilfe von Zeitsynchronmarken) der Signalerfassung an den einzelnen peripheren Crash-Sensoren 2, 2', 2" wird die Schallquelle geortet. Bei Erkennung eines Crashfalls wird nach Crashschwere und Crashtyp unterschieden.

In einem dritten Schritt wird eine Überschreitung eines Insassen-Gefährdungsschwellwertes geprüft, bzw. bestimmt und ggf. für alle oder einzelne der Insassen-Schutzeinrichtungen 3, 3, ', 3", 3'''eine Auslösentscheidung getroffen sowie jeweils ein Auslösezeitpunkt festgelegt, der die maximal erzielbare Schutzwirkung der Insassen-Schutzeinrichtungen (3, 3', 3", 3''') für die Insassen gewährleistet. Dementsprechend werden dann die relevanten Schutzstufen der relevanten Insassen-Schutzeinrichtungen (3, 3', 3", 3''') zum geeignetsten Zeitpunkt über die Auslöseelektronik 28 ausgelöst.

### Bezugszeichenliste

- 1: Crash-Sensorensystem
- 2, 2', 2": Crash-Sensor
- 3, 3', 3", 3''': Insassen-Schutzeinrichtung
- 4: Auslösesystem
- 5a-i: Sensor-Funktion
- 6a-i: Vorverstärker
- 7a-i: Frequenzfilter
- 8, 8', 8", 8''': Scanner
- 9: AD-Wandler
- 10: Mikroprozessor-System
- 11: Insassen-Schutzsystem
- 12a-e: Software
- 13a-e: Speicher
- 14-20: Funktionsblock Schallentstehung
- 21: Fahrzeugkarosserie
- 22: Gehäuse
- 23: Deckel
- 24: Steckverbindung
- 25: Kupplungselement
- 26: Verbindung
- 27: Datenbus-System
- 28: Auslöse-Elektronik
- 29, 29.1, 29.2, 29.3: Verankerung
- 30: Innenraum
- 31: Einpressstift
- 32: Einpressverbindung
- 33, 33.1, 33.2, 33.3: Träger
- 33.4: Steg
- 34, 34.1, 34.2, 34.3: Montageschnittstelle
- 35: Elektronikplatine
- 35.1: Druckkontaktfeder
- 36, 36.1, 36.2: sensitives Element
- 37: Schlitz
- 37.1: Schallweg
- 37.2: Schallweg
- 38: Hülsenstift
- 39: Bodenplatte
- L1, L2, R1, R2: Sensorbezeichnung im Crash-System
- L1 P,L2P, R1P, R2P: serielle Schnittstelle crashsystemseitig
- L1A,L2A, R1A, R2A: serielle Schnittstelle auslösesystemseitig

## Patentansprüche

1. Verfahren zur insassengefährdungsrelevanten Aktivierung von Insassen-Schutzeinrichtungen in einem Kraftfahrzeug bei Crashfällen, bei dem mit Hilfe eines prozessorgestützten Auslösesystems Signale von Crash-Sensoren ausgewertet und die Insassen-Schutzeinrichtungen angesteuert werden,
wobei
mindestens folgende Schritte durchgeführt werden:
1.) Erfassung und Vorverarbeitung von durch Einwirkungen auf die Fahrzeugkarosserie (21) erzeugten Signaturen mittels eines Crash-Sensorensystems (1), bestehend aus einer Mehrzahl von gleichartigen peripheren, jeweils wenigstens ein Körperschall-Sensorelement (5b) umfassenden Crash-Sensoren (2, 2', 2"), die an verschiedenen Stellen der Fahrzeugkarosserie (21) angeordnet sind,
2.) Auswertung der vorverarbeiteten Signaturen oder daraus abgeleiteter Größen mit Hilfe eines dem Auslösesystem (4) zugeordneten Crash-Algorithmus, nach Art, Intensität, Richtung und Zeit von Crash-Signaturen und/oder Insassen-Gefahrensignaturen, und
3.) Auslösung der crash-relevanten Insassen-Schutzeinrichtungen (3, 3', 3", 3''') zu einem jeweiligen, nach der erzielbaren Insassen-Schutzwirkung der Insassen-Schutzeinrichtungen (3, 3', 3", 3''') bestimmten Zeitpunkt, bei einer Überschreitung eines Insassen-Gefährdungsschwellwertes.
**dadurch gekennzeichnet,**
**dass** jeder Crash-Sensor (2, 2', 2") mehrere weitere Sensorelemente (5a, 5c-i) umfasst, mit denen diverse physikalische Einwirkungen auf die Fahrzeugkarosserie (21) erfassbar sind, und
**dass** jeder Crash-Sensor (2, 2', 2") weiter eine ein Mikroprozessorsystem (10) umfassende Vorverarbeitungseinrichtung aufweist, die von den Sensorelementen (5a-i) erzeugte Signaturen unmittelbar an den Crash-Sensor-Montagestellen vorverarbeitet.

2. Verfahren nach Anspruch 1,
**dadurch gekennzeichnet,**
**dass** das Auslösesystem (4) zur Bestimmung der Auslösezeitpunkte, in einem Speicher (13e) abgelegte Parameterfelder der auslösezeitpunktabhängigen Schutzleistungsfähigkeit der Insassen-Schutzeinrichtungen (3, 3', 3", 3''') heranzieht.

3. Verfahren nach Anspruch 2,
**dadurch gekennzeichnet,**
**dass** das Auslösesystem (4), den Parameterfeldern zugeordnete Schutzstufen der Insassen-Schutzeinrichtungen (3, 3', 3", 3'''), berücksichtigt.

4. Verfahren nach einem der Ansprüche 1 bis 3,
**dadurch gekennzeichnet,**
**dass** das Auslösesystem (4) zur Bestimmung der Gefährdungsschwellwertüberschreitungen die Insassen-Gefahrensignaturen heranzieht.

5. Verfahren nach einem der Ansprüche 1 bis 4,
**dadurch gekennzeichnet,**
**dass** das Auslösesystem (4) zur Bestimmung der Insassen-Gefahrensignaturen und der Gefährdungsschwellwertüberschreitungen, mindestens zwei verschiedenartige Crash-Signaturen heranzieht, und mindestens an diesen Crash-Signaturen eine oder verschiedene Plausibilitätsprüfungen durchgeführt.

6. Verfahren nach einem der Ansprüche 1 bis 5,
**dadurch gekennzeichnet,**
**dass** eine erste der erfassten Crash-Signaturen eine Körperultraschall-Signatur ist.

7. Verfahren nach einem der Ansprüche 1 bis 6,
**dadurch gekennzeichnet,**
**dass** eine zweite der erfassten Crash-Signaturen eine Beschleunigungs-Signatur ist.

8. Verfahren nach einem der Ansprüche 1 bis 7,
**dadurch gekennzeichnet,**
**dass** das Auslösesystem (4) zur Bestimmung der jeweiligen Auslösezeitpunkte für die Insassen-Schutzeinrichtungen (3, 3', 3", 3'''), die Körperultraschall-Signatur bei seitlichen Crash-Vorgängen mit einer höheren Priorität gewichtet.

9. Verfahren nach einem der Ansprüche 1 bis 8,
**dadurch gekennzeichnet,**
**dass** das Auslösesystem (4) eine als ein Gurtsystem mit variierbarer Gurtstraffkraft ausgebildete Insassen-Schutzeinrichtung (3, 3', 3", 3'''), mit einer an eine bestimmte Insassengefährdung und Gefährdungsschwellwertüberschreitung angepassten Gurtstraffkraft ansteuert.

10. Verfahren nach einem der Ansprüche 1 bis 9,
**dadurch gekennzeichnet,**
**dass** das Auslösesystem (4) eine als ein Airbagsystem ausgebildete Insassen-Schutzeinrichtung (3, 3', 3", 3''') mit einer an eine ermittelte Crashschwere angepassten variierbaren Entfaltungsstärke ansteuert.

11. Verfahren nach einem der Ansprüche 1 bis 10,
**dadurch gekennzeichnet,**
**dass** das Auslösesystem (4) unter Einbeziehung der Crash-Sensoren (2, 2', 2") eine permanente Systemeigendiagnose ausführt.

12. Verfahren nach Anspruch 11,
**dadurch gekennzeichnet,**
**dass** eine Stimulans der Crash-Sensoren (2, 2', 2") bei der Systemeigendiagnose durch ein Körperschallgeräusch oder/und ein Körperbeschleunigungsgeräusch des bewegten Fahrzeuges erfolgt.

13. Vorrichtung zur insassengefährdungsrelevanten Aktivierung von Insassen-Schutzeinrichtungen in einem Kraftfahrzeug bei Crashfällen, bei der mit Hilfe eines prozessorgestützten Auslösesystems Signale von Crash-Sensoren auswertbar und die Insassen-Schutzeinrichtungen ansteuerbar sind,
umfassend mindestens drei gleichartige, periphere, jeweils wenigstens ein Körperschall-Sensorelement (5b) umfassende Crash-Sensoren (2, 2', 2"), die an verschiedenen Stellen der Fahrzeugkarosserie (21) angeordnet sind,
**dadurch gekennzeichnet,**
**dass** jeder Crash-Sensor (2, 2', 2") mehrere weitere Sensorelemente (5a, 5c-i) umfasst, mit denen diverse physikalische Einwirkungen auf die Fahrzeugkarosserie (21) erfassbar sind, und
**dass** jeder Crash-Sensor (2, 2', 2") weiter eine ein Mikroprozessorsystem (10) umfassende Vorverarbeitungseinrichtung aufweist, mit der von den Sensorelementen (5a-i) erzeugte Signaturen unmittelbar an den Crash-Sensor-Montagestellen vorverarbeitbar sind.

14. Vorrichtung nach Anspruch 13,
**dadurch gekennzeichnet,**
**dass** das Crash-Sensorensystem (1) mindestens drei Crash-Sensoren (2, 2', 2") aufweist, die peripher seitengleich verteilt und zentral an der Fahrzeugkarosserie (21) angeordnet sind.

15. Vorrichtung nach Anspruch 13 oder 14,
**dadurch gekennzeichnet,**
**dass** ein zentral angeordneter Crash-Sensor (2, 2', 2") Bestandteil des Auslösesystems (4) ist.

16. Vorrichtung nach einem der Ansprüche 13 bis 15,
**dadurch gekennzeichnet,**
**dass** die Crash-Sensoren (2, 2', 2") an signatur- und/oder schutzrelevanten Stellen der Fahrzeugkarosserie (21) angeordnet sind.

17. Vorrichtung nach einem der Ansprüche 13 bis 16,
**dadurch gekennzeichnet,**
**dass** das Auslösesystem (4) über ein Datenbus-System (27) mit den Crash-Sensoren (2, 2', 2") des Crash-Sensorensystems (1) elektrisch verbunden ist.

18. Kraftfahrzeug mit einer Vorrichtung zur insassengefährdungsrelevanten Aktivierung von Insassen-Schutzeinrichtungen bei Crashfällen nach einem der Ansprüche 13 bis 17.

## Claims

1. A method for activating occupant protection systems in a motor vehicle in the event of a crash on the basis of the risk to occupants, in which method signals from crash sensors are evaluated and the occupant protection systems are actuated with the aid of a processor-supported trigger system,
wherein
at least the following steps are performed:
1.) detecting and preprocessing signatures, generated by effects on the vehicle body (21), by means of a crash sensor system (1) comprising a plurality of similar peripheral crash sensors (2, 2', 2") arranged at different points of the vehicle body (21) and each comprising at least one structure-borne sound sensor element (5b);
2.) evaluating the preprocessed signatures or variables derived therefrom with the aid of a crash algorithm assigned to the trigger system (4) according to a type, an intensity, a direction and a time of crash signatures and/or occupant risk signatures, and
3.) triggering the crash-relevant occupant protection systems (3, 3', 3", 3''') at respective moments in time, defined according to the achievable occupant protection effect of the occupant protection systems 3, 3', 3", 3'''), when an occupant risk threshold value is exceeded,
**characterised in that**
each crash sensor (2, 2', 2") comprises a plurality of further sensor elements (5a, 5c-i) by means of which various physical effects on the vehicle body (21) can be detected, and
**in that** each crash sensor (2, 2', 2") also has a preprocessing system which comprises a microprocessor system (10) and which preprocesses signatures generated by the sensor elements (5a-i) directly at the crash sensor mounting points.

2. A method according to claim 1,
**characterised in that**
in order to determine the triggering moments in time the trigger system (4) uses parameter fields, stored in a memory (13e), of the protection performance capability of the occupant protection systems (3, 3', 3", 3'''), said protection performance capability being dependent on the triggering moments in time.

3. A method according to claim 2,
**characterised in that**
the trigger system (4) takes into account protection stages of the occupant protection systems (3, 3', 3", 3''') assigned to the parameter fields.

4. A method according to any one of claims 1 to 3,
**characterised in that**
the trigger system (4) uses the occupant risk signatures to determine whether risk threshold values are exceeded.

5. A method according to any one of claims 1 to 4,
**characterised in that**
the trigger system (4) uses at least two different types of crash signatures to determine the occupant risk signatures and whether the risk threshold values have been exceeded and performs one or more plausibility checks at least on these crash signatures.

6. A method according to any one of claims 1 to 5,
**characterised in that**
a first of the detected crash signatures is a structure-borne ultrasound signature.

7. A method according to any one of claims 1 to 6,
**characterised in that**
a second of the detected crash signatures is an acceleration signature.

8. A method according to any one of claims 1 to 7,
**characterised in that**
the trigger system (4) weights the structure-borne ultrasound signature in the event of lateral crash events with a higher priority in order to determine the various triggering moments in time for the occupant protection systems (3, 3', 3", 3''').

9. A method according to any one of claims 1 to 8,
**characterised in that**
the trigger system (4) controls an occupant protection system (3, 3', 3", 3'''), which is constructed as a belt system with a variable belt tightening force, by means of a belt tightening force adapted to a specific occupant risk and an exceeding of a risk threshold value.

10. A method according to any one of claims 1 to 9,
**characterised in that**
the trigger system (4) controls an occupant protection system (3, 3', 3", 3'''), which is constructed as an airbag system, by means of a variable inflation intensity adapted to a determined severity of a crash.

11. A method according to any one of claims 1 to 10,
**characterised in that**
the trigger system (4) performs a permanent system self-diagnosis that includes the crash sensors (2, 2', 2").

12. A method according to claim 11,
**characterised in that**
the crash sensors (2, 2', 2") are stimulated during the system self-diagnosis by a structure-borne sound noise and/or a structure-borne acceleration noise of the moving motor vehicle.

13. A device for activating occupant protection systems in a motor vehicle in the event of a crash on the basis of the risk to occupants, in which, with the aid of a processor-supported trigger system, signals of crash sensors can be evaluated and the occupant protection systems can be controlled,
comprising at least three similar peripheral crash sensors (2, 2', 2") each comprising at least one structure-borne sound sensor element (5b) and arranged at different points of the vehicle body (21), **characterised in that** each crash sensor (2, 2', 2") comprises a plurality of further sensor elements (5a, 5c-i), by means of which various physical effects on the vehicle body (21) can be detected, and
**in that** each crash sensor (2, 2', 2") further comprises a preprocessing device which comprises a microprocessor system (10) and by which signatures generated by the sensor elements (5a-i) can be preprocessed directly at the crash sensor mounting points.

14. A device according to claim 13,
**characterised in that**
the crash sensor system (1) includes at least three crash sensors (2, 2', 2") that are peripherally distributed in an equal-sided manner and are arranged centrally on the vehicle body (21).

15. A device according to claim 13 or 14,
**characterised in that**
a centrally arranged crash sensor (2, 2', 2") is a component of the trigger system (4).

16. A device according to any one of claims 13 to 15,
**characterised in that**
the crash sensors (2, 2', 2") are arranged at signature-relevant and/or protection-relevant points of the vehicle body (21).

17. A device according to any one of claims 13 to 16,
**characterised in that**
the trigger system (4) is electrically connected by way of a data bus system (27) to the crash sensors (2, 2', 2") of the crash sensor system (1).

18. A motor vehicle having a device for activating occupant protection systems in the event of a crash on the basis of the risk to occupants, according to any one of claims 13 to 17.

## Revendications

1. Procédé d'activation de dispositifs de protection significatifs en cas de mise en danger des passagers d'un véhicule lors d'une collision selon lequel, à l'aide d'un signal de déclenchement assisté par ordinateur des signaux de capteurs de collision sont exploités, et les dispositifs de protection des passagers sont commandés, selon lequel on met en oeuvre au moins les étapes suivantes consistant à :
1) détecter et prétraiter des signes produits par des interventions sur la carrosserie du véhicule (21), au moyen d'un système de capteurs de collision (1) constitué par un ensemble de capteurs de collision (2, 2', 2") périphériques de même type, comprenant chacun un élément capteur de bruit structurel (5b) qui sont montés à différents emplacements de la carrosserie (21) du véhicule,
2) exploiter les signes prétraités ou des grandeurs dérivées de ceux-ci à l'aide d'un algorithme de collision associé au système de déclenchement (4) selon l'intensité, la direction et le temps de signes de collision et/ou de signes de mise en danger des passagers,
3) déclencher les dispositifs de protection des passagers significatifs en cas de collision (3, 3', 3", 3"') à un instant déterminé respectif selon l'action de protection des passagers pouvant être obtenue des dispositifs de protection des passagers (3, 3', 3", 3"') en présence d'un dépassement d'une valeur de seuil de la mise en danger des passagers,
**caractérisé en ce que**
chaque détecteur de collision (2, 2', 2") comporte plusieurs autres éléments capteurs (5a, 5c-i) permettant de détecter différentes interventions physiques sur la carrosserie du véhicule (21), et
chaque capteur de collision (2, 2', 2") comporte en outre un dispositif de traitement préalable comprenant un système de micro-processeur (10) qui effectue un prétraitement des signes produites par les éléments capteurs (5a-i) directement aux emplacements de montage des capteurs de collision.

2. Procédé conforme à la revendication 1,
**caractérisé en ce que**
le système de déclenchement (4) utilise, pour déterminer les instants de déclenchement des champs de paramètres enregistrés dans une mémoire (13e) de la performance de protection dépendant de l'instant de déclenchement des dispositifs de protection des passagers (3, 3', 3", 3''').

3. Procédé conforme à la revendication 2,
**caractérisé en ce que**
le système de déclenchement (4) prend en considération des niveaux de protection associés aux champs de paramètre des dispositifs de protection des passagers (3, 3', 3", 3''').

4. Procédé conforme à l'une des revendications 1 à 3,
**caractérisé en ce que**
pour déterminer des dépassements du seuil de mise en danger le système de déclenchement (4) utilise les signes de danger des passagers.

5. Procédé conforme à l'une des revendications 1 à 4,
**caractérisé en ce que**
pour déterminer les signes de danger des passagers et les dépassements du seuil de mise en danger, le système de déclenchement (4) utilise au moins deux signes de collision différents, et effectue au moins sur ces signes de collision un ou différents contrôle(s) de vraisemblance.

6. Procédé conforme à l'une des revendications 1 à 5,
**caractérisé en ce qu'**
un premier des signes de collision détectés est un signe de bruit structurel ultrasonore.

7. Procédé conforme à l'une des revendications 1 à 6,
**caractérisé en ce qu'**
un second des signes de collision détectés est un signe d'accélération.

8. Procédé conforme à l'une des revendications 1 à 7,
**caractérisé en ce que**
pour déterminer les instants de déclenchement respectifs des dispositifs de protection des passagers (3, 3', 3", 3''') le système de déclenchement (4) effectue une pondération d'un signe de bruit structurel ultrasonore ces processus de collision latéraux avec une plus grande priorité.

9. Procédé conforme à l'une des revendications 1 à 8,
**caractérisé en ce que**
le système de déclenchement (4) commande un dispositif de protection des passagers (3, 3', 3", 3''').réalisé sous la forme d'un système de ceinture ayant une force de tension de ceinture variable adaptée à une mise en danger déterminée des passagers et à un dépassement déterminé de la valeur de seuil de mise en danger.

10. Procédé conforme à l'une des revendications 1 à 9,
**caractérisé en ce que**
le système de déclenchement (4) commande un système de protection des passagers (3, 3', 3", 3''') réalisée sous la forme d'un système d'airbag ayant une force de déploiement variable adaptée au seuil de collision déterminé.

11. Procédé conforme à l'une des revendications 1 à 10,
**caractérisé en ce que**
le système de déclenchement (4) effectue en permanence un diagnostic propre du système en utilisant les capteurs de collision (2, 2', 2").

12. Procédé conforme à la revendication 11,
**caractérisé en ce que**
lors du diagnostic propre du système on effectue une stimulation des capteurs de collision (2, 2', 2") par un bruit structurel et/ou un bruit d'accélération structurel du véhicule déplacé.

13. Dispositif d'activation de dispositifs de protection significatifs en cas de mise en danger des passagers d'un véhicule lors d'une collision, dans lequel, à l'aide d'un système de déclenchement assisté par ordinateur des signaux de capteurs de collision peuvent être exploités et les dispositifs de protection des passagers peuvent être commandés, comprenant au moins trois capteurs de collision périphériques (2, 2', 2") de même type comprenant chacun au moins un élément capteur de bruit structurel (5b) qui sont montés à différents emplacement de la carrosserie (21) du véhicule,
**caractérisé en ce que**
chaque capteur de collision (2, 2', 2") comporte plusieurs autres éléments capteurs (5a, 5c-i) permettant de détecter diverses actions physiques sur la carrosserie (21) du véhicule, et
chaque capteur de collision (2, 2', 2") comporte en outre un dispositif de traitement préalable comportant un micro-processeur (10) permettant de traiter préalablement des signes produits par les éléments capteurs (5ai) directement sur les emplacements de montage des capteurs de collision.

14. Dispositif conforme à la revendication 13,
**caractérisé en ce que**
le système de capteurs de collision (1) comporte au moins trois capteurs de collision (2, 2', 2") qui sont montés en étant répartis latéralement sur la périphérie et dans une position centrale sur la carrosserie (21) du véhicule.

15. Dispositif conforme à la revendication 13 ou 14,
**caractérisé en ce qu'**
un capteur de collision monté dans une position centrale (2, 2', 2") est un composant du système de déclenchement (4).

16. Dispositif conforme à l'une des revendications 13 à 15,
**caractérisé en ce que**
les capteurs de collision (2, 2', 2") sont montés à des emplacements de la carrosserie (21) du véhicule significatifs pour les signes et/ou à la protection.

17. Dispositif conforme à l'une des revendications 13 à 16,
**caractérisé en ce que**
le système de déclenchement (4) est relié électriquement par un système de bus de données (27) aux capteurs de collision (2, 2', 2") du système de capteurs de collision (1).

18. Véhicule équipé d'un dispositif d'activation de dispositifs de protection significatifs en cas de mise en danger des passagers du véhicule lors d'une collision conforme à l'une des revendications 13 à 17.
